# EUROPEAN PATENT APPLICATION

(11) **EP 2 077 544 A1**
(43) Date of publication of application: **08.07.2009**
(21) Application number: 07835010.5
(22) Date of filing: 21.09.2007
(51) Int. Cl.: G09F 19/00, H04Q 7/20, G06Q 50/00

(54) **METHOD FOR DISTRIBUTING PUBLICITY PICTURES**

(30) Priority: 21.09.2006 RU 2006133729
(71) Applicant: Obshchestvo S Ogranichennoy Otvetstvennostyu "Superfone", Moscow 119146 (RU)
(72) Inventor: TETERIN, Oleg Olegovich, Moscow, 125009 (RU)
(74) Representative: Dendorfer, Claus
(86) International application number: PCT/RU2007/000510
(87) International publication number: WO 2008/100175

(57) **Abstract**

The invention relates to distributing publicity pictures to cellular communications subscribers. The inventive method consists in filling an enquiry by a subscriber and in selecting the subscribers for distributing publicity pictures by an advertiser according to said questionnaire. The pictures are loaded prior to the reception of an incoming/outgoing call or an incoming/outgoing SMS on a cellular phone. The picture is displayed simultaneously with the reception of an incoming/outgoing call, or an incoming/outgoing SMS and/or an MMS. The subscriber visualises the picture simultaneously with the answer to the call and/or at the end of the call and/or prior to the visualisation and the answer to the SMS or the MMS. The picture is displayed on the phone screen during the entire conversation or before clearing a call and/or answer to the SMS or MMS. Said method makes it possible to take into account the consumer's interest, to reduce time for receiving advertising information, to improve the certainty of the reception of advertising and to create convenient conditions for providing information services.

## Description

The invention relates to the field of distributing, via the original program for mobile telephones of the Smartphone type, the advertisement information images, particularly the images (with the consent of subscriber) prior to the moment of incoming/outgoing call, and reviewing the sent advertisement information images by subscriber using this program.

Known is the method for distributing customized advertisement information messages to users, which method being based on the steps of: registering, at the central station, providers and recipients of advertisement information messages, and forming invoices for the providers and recipients of advertisement in-formation messages; then contributing, by means of cash payment and/or cash-less transfer, money resources obtained from the providers for every of advertisement information images that have been directed to the user's terminal after receiving from the user the respective request together with the image of the message provider page. In the system implementing the known method, a number of messages received by users is fixed, after which the sums for delivering those advertisement information messages is transferred to the bank account of each registered user (see, e.g., the U.S. Pat. No. 5,933,811, Int. C1. G06Q 30/00, 1999).

The disadvantages of this method consist in that users must perform additional operations after registering at the content-provider terminal, namely accessing resources of advertisement information message providers. Thus, a user must possess the information on who is the supplier of the given content-provider, as well as the addresses of the supplier resources. In such a case, users must each time initiate the message distribution, which hinders the distribution mass volume and achievement of the maximal coverage of the target audience, herewith the advertisement information message providers can affect the qualitative and quantitative characteristics of the target audience only indirectly.

Also known is the method for distributing advertisement information im-ages by means of publishing advertisements in the mobile communication sys-tem, which method including steps of: generating a request for advertisement information at an initial mobile communication device, a cellular phone; transmitting the request for advertisement information to an advertisement message forming device storing an advertisement information array; loading, into a cellular phone, an advertisement information image by providing the advertisement information requested from the advertisement message forming device; receiving at least the requested advertisement information presented by the advertisement message forming device; and storing at least the requested advertisement information in a storage device; demonstrating the advertisement information image by means of transmitting and representing the advertisement information selected from the stored requested advertisement information to the user of the recipient mobile communication device when transmitting a connection request with the recipient communication device; recording the selected advertisement information represented to the user, the selected information being represented to the user until the user receives the connection request; and compensating the user's expenses arisen from using the cellular phone (see the Patent Application EA No. 200501816, Int. C1. H04Q 7/20, published Aug. 25, 2006, or the U.S. Pat. No. 7,162,226, Int. C1. H04Q 7/20, published Oct. 13, 2005).

The disadvantages of the known method consist in that the assured contact with an end advertisement information consumer, a cellular communication user, is not provided for an advertiser because of that the advertiser's interests in distributing the advertisement information of his/her interest being not taken into account, and a social profile of an end advertisement information consumer, a mobile communication device user (cellular communication user) is not found out, wishes and interests of that user are not determined, which, in turn, results in distributing a great amount of advertisement information images (increased traffic) in order for making the advertisement effective. Moreover, a discomfort arises for a cellular phone user because of that viewing the received advertisement information is possible only prior to the moment of picking up the phone (acquiring the connection request), whereby the user is forced either to suspend a conversation and view the advertisement information prior to the conversation, or to throw away the viewing and begin the conversation; further, the reliability of the information service is reduced and a time for rendering the information service is increased because of the necessity for generating each time an advertisement information request in a cell phone and transmitting thereof to a advertisement message forming device, which reduces the reliability of obtaining the information of interest due to possible failures during the advertisement information request.

The object of the invention consists in removing said disadvantages and providing the assured a task-oriented contact with an end advertisement information user, a cellular communication user, taking into account his/her social profile and wishes, and in reducing the time for obtaining the advertisement in-formation, increasing the reliability of obtaining the information of interest, and creating a more comfortable condition for rendering the information service.

Said object is achieved by means of a method for distributing advertisement information images, which method including steps of: loading an advertisement information image into a subscriber's cellular phone; demonstrating the advertisement information image at the cellular phone; viewing the advertisement information image; and compensating the user's expenses arisen from using the cellular phone; and herewith the subscriber fills out a questionnaire, on which basis the advertiser selects subscribers for distributing his/her advertisement information image, as which to the cellular phone subscriber is sent the advertisement information image for which the subscriber has subscribed when filling out the questionnaire; wherein the step of loading said advertisement information image to the cellular phone subscriber being carried out with his/her consent and according to the media plan of the advertiser till receiving to the cellular phone an incoming/outgoing call, or incoming/outgoing SMS and/or MMS message; the step of demonstrating said advertisement information image being carried out at the time of the incoming/outgoing call or incoming/outgoing SMS and/or MMS message; the step of viewing said advertisement information image being carried out by the subscriber till the time of the call reply, and/or at the time of the call termination, and/or till the time of the SMS and MMS message view and reply, the advertisement information image being on the mobile phone screen during entire continuance of the conversation or until the call release and/or the SMS and MMS message reply, and the step of compensating the user's expenses being carried out by means of receiving monetary reward to the user's account for every demonstration of the advertisement information image.

When receiving a new SMS and/or MMS message at the time of viewing the advertisement information image, on the phone screen emerges a notification not impeding to view the advertisement information and meaning the fact of receiving the new SMS or MMS message for the subscriber or a new advertisement information image.

The advertisement information image presented on the mobile phone screen is accompanied with corresponding voice or musical or sound accompaniment being a part of the advertisement information image.

The advertisement information image coming to the subscriber's mobile phone screen is scaled in accordance with the size of the mobile phone screen.

The monetary reward received to the subscriber's account could be used by him/her for paying the communication service and/or any other services, and/or cashed by the subscriber.

Due to this distribution method, the subscriber has a possibility to view advertisement information images not only till the time of the call receipt and/or the SMS and MMS message view, but also at the time of the call termination, i.e., the image is on the mobile phone screen during entire continuance of the conversation (in order for assuring him-/herself in the call release the subscriber looks at the screen) and the call release (when wishing not to reply). In any case, the subscriber will receive the monetary reward for every advertisement information image appeared on his/her own mobile phone screen. In the case of demonstrating the advertisement information image at the time of coming a SMS and MMS message, with consent of the subscriber, first a forced view of the advertiser image occurs, and only then, after pressing any key of the mobile phone, the subscriber views the window with the information from the sender comprised in the SMS or MMS message. In the case of incoming SMS or MMS message with the advertisement information image, the subscriber receives a notification on receipt of a new SMS or MMS, and the advertisement information image is demonstrated full-screen (depending on the screen size, the image is scaled automatically in the screen size), and a word "message" in the national language of the program distribution region appears in the bottom part of the screen. The size of the word "message" occupies not more than 1.5 cm². The subscriber receives up to 10 US cents at the rate in the national currency of the program distribution region for every demonstrated advertisement information image at the time of incoming/outgoing call and/or SMS and MMS message, and could use this money at any his/her discretion including cashing.

An advantage of the method consists also in that images received by the subscribers could be used as discount coupons (on the phone screen), the subscriber have an overall control of status and flow of funds on his/her bank account in the payment system, and subscribers who has connected to the proposed resource by means of mobile phones can, at any time and in any place, receive a text of the advertisement distribution and load logotypes and pictures; herewith, they need neither computer, nor Internet connection.

The total installation of the program in the phone with the preset GPRS access point will last not more than 5 minutes.

Implementation of the method for distributing images for subscribers by the inventor

The inventor registers at each federal and local cellular operator the same four-digit short charge-free SMS number for distributing his original program for mobile phones. The SMS number has a zero tariff classification. When sending a certain media code to that number, the subscriber's funds are written off not more than a conventional cost of the outgoing SMS message in accordance with the subscriber's tariff plan. The inventor advertises this charge-free SMS number in order for cellular communication subscribers to load this original program to their phones in accordance with the idea "if you want to speak over mobile phone without payment, then load to your phone the charge-free program of the inventor". A subscriber who has seen/heard the advertisement sends the charge-free SMS message with the media code indicated in the advertisement for loading the program being advertised. The media code is the special letters or numbers in any sequence that allow to determine where and when could the subscriber see/hear the advertisement of this program. By virtue of this media code, the inventor can determine the efficiency of the advertisement via given media carrier that has brought a new subscriber for loading the program through the charge-free SMS number.

During 60 seconds, in reply to the sent first SMS message, the subscriber receives the response SMS message with the WAP reference of the inventor for loading the charge-free program for mobile phone. Together with the WAP reference for loading the program, an advertisement of an outside advertiser negotiated a contract with the inventor comes. The WAP reference for loading the charge-free program is customized. It cannot be used by a subscriber of another mobile phone number for successful program operation. The company WAP reference consists of not more than 50 symbols in the Latin or Russian transcription and could be used during 48 hours from the moment of sending the first SMS message. For the viewed text advertisement (not more than 60 symbols in the Latin or Russian transcription in the response SMS message with the WAP reference to the subscriber, the inventor will at once, during 60 seconds, pay up to 2 US cents at the rate in the national currency of the program distribution region directly to the subscriber's account of the subscriber's mobile phone. All transactions for replenishing the subscriber's mobile account with money will be performed through the payment system and/or directly through the agent contract of the inventor with the operator. The inventor will obtain for this transaction a commission at the rate of not less than 5% from the amount of transfer to the subscriber's mobile account.

The subscriber makes a transition according to the indicated customized WAP reference of his/her Smartphone on the Symbian, Windows Mobile, Linux, Palm, RIM platform or other platforms performing the operation of the Smartphones, and data necessary for the program operation are loaded automatically in the Smartphone. Prior to that transition, the subscriber will be requested for the consent: "The server connection is required. Execute?" and the answer versions "yes" and "no". The subscriber, in order for loading the program into the phone, presses the key responding for pressing the word "yes" on the screen. In order for making the transition according to the customized WAP reference, the GPRS WAP data transmission is used. In the future, in order for receiving advertisement via the program, the GPRS Internet will be used.

The program is loaded to the subscriber's Smartphone, which program permitting the inventor to distribute the advertisement information messages to that subscriber at the time of incoming and outgoing calls and incoming and outgoing SMS and MMS message. Prior to that loading, the subscriber will be notified: "Security warning: the supplier cannot be checked. Continue?", as well as the answer versions "yes" and "no". The subscriber responses "yes" for the program operation. After these steps, on the subscriber's phone screen will appear a message "Install the inventor's program?", and two answer options "yes" and "no". The subscriber responses "yes". Then, on the subscriber's phone screen will appear a message with several functions "Functions: install, show certificate, show data". If the subscriber presses the function "install", then the program will continue the installation. If the subscriber presses the function "show certificate", all necessary certificates of the program will be shown to the subscriber. If the subscriber presses the function "show data", the following data will be shown to the subscriber: "format"--the phone operating system (Symbian, or Windows Mobile, or Linux, or Palm, or RIM, or other operating system for Smartphones), "name"--the company name, "version"--the inventor's program versions, "supplier"--the program supplier name, and "status"--the program status. After pressing "install", the program installation to the subscriber is executed during 10 seconds. If at any time in the course of loading this program a call and/or message from some other subscriber come to the subscriber, then the subscriber will receive the call and/or message and, after terminating the conversation and/or viewing the message, those program window that has temporarily disappeared during the conversation and/or viewing the message will return to the subscriber's screen. After the installation, the patented inventor's logotype and a license agreement for the use of the program are highlighted of the subscriber's screen. This license agreement is the contract between the subscriber and the inventor, and must be necessarily accepted by the subscriber for the program operation.

After viewing this agreement, the subscriber will be asked to "accept" of to "refuse to accept" the conditions of this agreement. If the subscriber refuses to accept the agreement conditions, then the program will not be installed at the subscriber's mobile phone. If the subscriber "accepts" the agreement conditions, then the program will request an access for the data transmission. At this access point, the inventor's GPRS Internet access point will be already tuned. The subscriber selects this access point and presses with the key onto the selected point. After this pressing, a message will appear on the mobile phone screen that "the company program has been installed successfully" and "the program has been activated". Further, the subscriber will be suggested to fill a questionnaire compulsory for filling and consisting of not more than 40 questions. A time of filling this questionnaire will be not more than 75 seconds. The subscriber presses the push button "further". Then a window pops up with the information that the inventor guarantees the privacy of the data (but reserves the right for transferring the data to advertisers) reported when filling the questionnaire, and that for the first filling the questionnaire the subscriber will receive up to 10 cents at the rate in the national currency, as well as a push button "further" will appear.

After pressing this bush button, the subscriber selects answers to the questions by using the cursor key. The subscriber does not press keys with letters and numbers for answering the questions of the electronic questionnaire, but uses only the cursor of his/her mobile phone. The subscriber answers, in the compulsory sequence, to such questions as a town of residence, in the case of pressing the town of residence the subscriber should indicate a sector of the town of residence and further a street of residence. Is in the suggested list the street of residence will not be cited, the subscriber will select "other". The subscriber must also indicate the town of registration, the sex, the age (the answer versions will be suggested as follows: prior to 14, from 14 to 18, from 18 to 21, from 21 to 25, from 25 to 30, from 30 to 40, from 40 to 50, from 50 to 60, from 60 and more), the family status (with answer versions: single/unmarried and married), children (with answer versions: yes or no), in the case of "yes" the questionnaire asks to select the number of children (the questionnaire indicates from 1 to 5 children). Then the subscriber answers on his/her educational level (with the answer versions: preschool child, schoolchild, secondary level, specialized secondary level, incomplete higher education, science degree). Then the subscriber indicated his/her activity status (answer versions: "no business, studying/student, individual activity, trainee, worker, clerk, manager, controlling branch, director, on retirement benefit, other"). The subscriber selects, presses "OK", and thus fills other sections including "sphere of business" with the answer versions: "none, service, catering trade, commerce, farming, education, health protection, jurisprudence, transport, professional sport, finance, information technology, house-building, industry, advertising, art, cinematography, show-business, law enforcement bodies, military forces, other". Then the subscriber is suggested to select his/her monthly revenue per family member with options: under 200, under 500, under 100, under 200, and over 200 US dollars monthly per one family member. This questionnaire rubric could be sponsored by an advertiser in the category "management investment company" or "company selling unit investment funds on the finance market". And any other rubric could be sponsored depending on wishes of the advertiser.

Further, there is a question on possessing a motorcar with two answer versions: "yes" and "no". If the subscriber presses "no", then he/she proceeds for answering to another question related to the Internet. But if the subscriber has answered "yes", the subscriber is suggested to select, form popular models, the make of a car that the subscriber possesses at present. The subscriber is suggested to select, among the brands of BMW, Mercedes, Ford, Renault, Volkswagen, Audi, Lada, VAZ, Gazelle, etc., popular models of motor-cars of the Russian and import production.

Then the subscriber who has and who has no a motorcar is questioned on the use of the Internet with the answer versions: "daily, weekly, monthly, not use". Then the subscriber selects what hobby he/she is adhered: "music, sport, cinema, books, computers". As opposed to other variants, these versions are selected by marking with a conventional sign (e.g., "oblique cross"), and after selecting several such options the subscriber presses OK. The subscriber answers also to other questions related to his/her vacation. The answer versions: "yearly, twice a year, three times a year, more than three times a year, other, none". In this question section, there is provided a window for positioning an advertisement of travel company, which will increase the monetary reward for the filled questionnaire from the possible 10 cents to the possible 15 cents (in the case of absence the advertiser, the subscriber receives up to 10 cents for the first questionnaire completing). Further, the subscriber answers to the questions related to the leisure time in this window, as well as in the window "vacation" is provided a place for positioning an advertisement of leisure places (nightclubs, restaurants, cinemas, and other entertainment facilities). An advertisement information in such windows of the electronic questionnaire could be of several kinds: static, GIF animated, video. The subscriber is suggested the answer versions: at home, clubs, restaurants, sport, cinema, theater/concerts, gaming clubs, casino, other. After selecting each answer, the subscriber must press a key on his/her mobile phone keypad, which is responsible for the answer "yes" on the mobile phone screen.

Questions on possessing animals with the versions "yes" and "no". Questions on purchase of female care articles are suggested to women only with the answer versions: daily, weekly, monthly, not purchase. Questions on purchase of cosmetics are also suggested to women only with the answer versions: daily, weekly, monthly, not purchase. Questions on purchase of articles for domestic purposes are suggested to both men and women with the answer versions: daily, weekly, monthly, not purchase. Questions on smoking with the answer versions: not smoking, up to 5 cigarette per day, up to 10 cigarette per day, up to 2 packs per day. Then the inventor asks the subscriber on whether he/she confirms that he/she is a Russian Federation person elder than 18 years, consumer of tobacco products, and agrees to receive the tobacco product advertisement. Two answer versions are suggested. In the case of "yes", used brands are indicated, and the subscriber selects the brand being used by him/her. Questions on alcohol with the answer versions: use, not use, seldom. Further the inventor asks the subscriber on whether he/she confirms that he/she is a Russian Federation person elder than 18 years, consumer of alcohol production, and agrees to receive the alcohol production advertisement. Two answer versions are suggested. In the case of "yes", used brands are indicated. The answer versions for beer: use, not use, seldom. Further the inventor asks the subscriber on whether he/she confirms that he/she is a Russian Federation person elder than 18 years, consumer of "beer" category production, and agrees to receive the beer advertisement. Two answer versions are suggested. In the case of "yes", used brands are indicated. In the case of answers "no", the questionnaire proceeds to answers to other questions.

Question on gambling houses cause the push-button "answers" to appear. The answer versions: play, not play. Further the inventor asks the subscriber on whether he/she confirms that he/she is a Russian Federation person elder than 18 years, visits gambling houses, and agrees to receive the casino advertisement. There are two answer versions. In the case of "yes", some gambling houses are indicated. After marking the right answer by the mobile phone cursor, the subscriber presses the key that is responsible for "OK", i.e., the subscriber's consent with the answer to one or another question.

A feature of this questionnaire consists in that, after selection of the answer for a certain question, the further questionnaire filling is based on the first answer. For example, if the subscriber has selected the answer "man" and indicated the school age, then the subscriber will not be questioned on the activity status "clerk, on retirement benefit" etc., and, hence, on the purchase of "female care articles". The distinctive feature of the program is in that the program allows for positioning advertisement of categories (cigarettes, alcohol, beer, gambling houses) despite the statutory bar for positioning advertisement in the conventional mass media (TV, radio, outdoor advertisement). At present, there are no legislative limitations on advertisement via mobile phones at the time of incoming/outgoing call or SMS and MMS message. In essence, this is a direct delivery of advertisement information images to a subscriber via cellular communication channels with the subscriber's consent at a charge remitted directly to the subscriber's account, rather than advertisement positioned to unlimited number of recipients, as usually considered, via the conventional mass media. Funds for viewing advertisement information images received to the mobile account could be used by a subscriber at any his/her discretion.

At the end of filling the questionnaire, the inventor's program will thank for filling the questionnaire and remain at the phone in the form of background still of the menu screenshot, i.e., the inventor's logotype, corporate slogan and contact information will be seen until exit the program. The subscriber will be also reported that the information provided by the subscriber is of great importance for the inventor, and that money for this questionnaire will come to the mobile account of the subscriber filled the questionnaire during 60 seconds. After filling the questionnaire, a sum up to 10 US cents will come to the subscriber account during 60 seconds, and in the case of presence of advertisement information image within the questionnaire the amount of money can be more than 10 US cents and come up to 0.40 US dollars. The subscriber can exit the menu by pressing "back" with the phone function keys.

After successful program installation, the conventional symbol (icon) of the program with the individual company logotype becomes established in the phone menu. From this moment on, the subscriber can receive advertisement information images only in the case, when a third party well-known to the subscriber calls the subscriber, or in the case of a false ring from unknown subscriber with whom the inventor has no concern (i.e., telemarketing broadcast call to subscribers by respective telemarketing services). Thus the subscriber can receive an advertisement information image not at any time and not in any place. The program will receive messages without subscriber knowledge, but the subscriber will view them only in the case of incoming or outgoing message. Circumstances of receiving a call and/or message will depend on a known caller and/or known sender of SMS or MMS message. Also, a specific form of advertisement information image (not text, but graphic, with elements of animation and/or complete video and sound instead of a phone ring tone) that the subscriber receives will depend on an advertiser (advertisement information image possessor) who selects subscribers for distributing his/her image on the basis of the questionnaire filled by the subscriber (on a cost basis, i.e., the inventor has paid money funds to the subscriber for that filling). In order for viewing advertisement information images the subscriber must not himself/herself load especially any pictures, logotypes. All graphic elements and any other information are loaded automatically into the phone in the background mode of the phone operation due to the unique inventor's program which communicates, without knowledge, but with a consent of the subscriber (who has voluntary subscribed the service by pressing "agree" at the time of reading the license agreement and offer prior to the complete program loading), via the GPRS Internet channel with the automatic center of the inventor, and which is shown only at the time of incoming and outgoing call and SMS and MMS message. After the program loading to the phone, the inventor possesses not only the personal data, but also the data on the phone model and mobile phone number, and the data of the IMEI code of the mobile phone. The subscriber indicates in the questionnaire his/her consent for receiving audio advertisement information images, video advertisement information images, static advertisement information image, GIF animated advertisement information image, video advertisement information image with a sound. On the basis of the indicated wishes, the program determines automatically, what advertisement information images and whom must be shown at the time of incoming or outgoing call or message. After filling the questionnaire, the program application requires up to 120 seconds for loading, via the GPRS Internet connection, advertisement information images (as a packet of up to 10 pieces) in order according to the media plan coordinated with advertisers.

The program size in the described form will consist at most 200 kilobytes. If the questionnaire has been filled previously, and the subscriber wish to update it, then the answers given previously by the subscriber will be stored and highlighted on the mobile phone screen. If the subscriber wishes to alter those data, he/she must, for that end, to find the icon with the program logotype in the menu of his/her phone, enter the program menu, after loading the background menu still--press the "functions" key and find the item "my questionnaire" in the menu. By pressing this push-button the subscriber will enter the menu of already filled questionnaire, and if the subscriber would like to alter the filled questionnaire, then he/she need only to use one key, the cursor. For the second questionnaire filling, if this filling has been initiated by an advertiser, the inventor will pay the subscriber up to 10 cents during 60 seconds just after the filling. If the subscriber has filled the questionnaire independently, the inventor will pay nothing to the subscriber. The program could be easily deleted by the phone means. For that end, it is necessary to press "suspend" in the program menu, find the item "application manager" in the phone menu, and press the function "delete" from the phone memory. If the subscriber deletes the program prior to the time of crediting an "additional bonus" which enters an account of faithful subscriber weekly, then the subscriber loses in practice the loyalty bonus, i.e., loses the money funds equal to 30% of money transferred by the inventor to the advantage of the subscriber for this week (for the week in which the subscriber has decided to disconnect). But if the subscriber has not disconnect, then additional 30% of the sum of all already received money will be transferred weekly.

Each program installed on the subscriber's phone is customized and inimitable, i.e., it is unique and has its serial number at the inventor's server. When entering every time the menu "questionnaire", the subscriber should compulsorily every time scroll entirely the answers to the questions filled by him/her previously. Only after the entire scrolling the whole questionnaire, the subscriber could view the advertisement information images received previously in the background mode at the time of incoming/outgoing call/message. If the subscriber does not scroll the windows with the personal data, then the advertisement information images will be overlapped with the questionnaire windows in the case of receiving the incoming/outgoing call/message at the time opening the "questionnaire". Besides the background picture with the logotype, slogan and contact information of the inventor, the program menu consists of rubrics "my money", "my questionnaire", "my advertisement", "rules", "store", "re-registration", "GPRS point", "suspend", "my company".

In the item "my money" the subscriber could see all history on the payments received from the inventor in all period after the program installation. The information on the payments to the subscriber for the shown advertisement information images comes for the reporting month and previous month. Nevertheless, the SMS notification on replenishment comes to the subscriber just after finishing every call (notwithstanding the fact whether the phone has been picked up or the call has not been replied or has been thrown off). The uniqueness of this invention consists in that after every incoming and/or outgoing call and/or SMS or MMS message, the subscriber receives a money reward to his/her mobile account. Every money reward is accompanied with an incoming SMS notification. This notification is sent by a cellular communication operator. Each such notification can also (in the case of ordering by an advertiser) contain an image of the advertisement information character, which will be paid for, and the payment will be notified too. So, this may have unlimited amount of notifications. Thus the inventor will indicate in the program the number of times, for which the money will be paid to the subscriber in order for decreasing the number of the notifications on receiving the money funds to the mobile account. The inventor will also summarize this rewards and transfer the money funds piece by piece in order for not irritating the subscriber. Nevertheless, those portions will come no less than one time per hour in daytime and afternoon time. After pressing the push-button "my money", the window "load in progress" is highlighted on the subscriber's screen. The payment information is loaded from the server component of the inventor. The subscriber can update his/her personal information in the menu "my questionnaire" in the case of delivery of a child by changing the questionnaire indication "no children" to "1 child in the family" and in the same manner change other questionnaire data (possessing a motor-car, age, etc.). For the questionnaire updating the subscriber does not receive the monetary reward from the inventor.

In the menu "my advertisement", the subscriber has a possibility to view 15 advertisement information images loaded up to the time of viewing (in the picture-graphic form). And in the case of beginning an incoming/outgoing call or message, the images from the menu "me advertisement" pop up along with the caller number identifier (which area being not more than 1.5 cm.sup.2), if the service "number identifier" is installed at the subscriber. If the service for identifying the caller number has not been installed, then on the subscriber's screen the word "call" is highlighted at the time of a call, which word occupies not more than 1 cm.sup.2, and the rest screen field is occupied with a graphical still or dynamic or video image of the advertisement information character. This invention permits to scale automatically the image to the size of the mobile phone screen. Thus, for example, a plurality of NOKIA models including the 6600 have the screen size about 15 cm.sup.2, and the smartphone of the model XDA 02 the screen size is more than 20 cm.sup.2. Hence, the invention in the case of NOKIA and other smartphones permits to show the graphical image on the whole screen area. Nevertheless, the inventor has envisaged that in the bottom screen portion having, by default of the phone, an information character with the key names: "messages" and "camera" in the NOKIA smartphones, and the word "start" in the smartphones on the Windows Mobile platform, etc., has been left this area of not more than 2 cm.sup.2, which is not overlapped with the advertisement information image. This is done for that it could be possible, at the time of one incoming call with an advertisement information image, in the case of receiving a second incoming call (if the subscriber has the service "call wait/hold") with an advertisement information image, after receiving the second call, to control the phone functions (notebook, calendar, and other phone applications). The file names stored in the menu "my advertisement" correspond strictly to the names of the advertised brands. For example, if there is at this moment the advertisement information campaign of the "Pepsi-cola" company within the inventor's program, then within the menu, after selecting the item "me advertisement", a line with the name "Pepsi-cola" printed on the screen in the Latin transcription will be one of 15 advertisement information images, and by pressing that line the subscriber will see the image that was on the screen at the time of incoming/outgoing call/message. Further, while reviewing this image, the push-buttons "functions" and "back" will appear at the subscriber together with the advertiser image. For this viewing, neither subscriber, nor advertiser pays and receives any additional funds. The push-button "back" directs the subscriber back into the menu "my advertisement" with the names of companies which images are stored in the memory of the menu "my advertisement". By pressing the push-button "functions", the subscriber obtains the following possibilities: "store", "proceed", "download". The option "store" stores the advertisement information image selected from the menu "my advertisement" within the folder "Gallery" in the phone device. Further, this image is a mobile voucher (i.e., electronic leaflet that allows the subscriber, by presenting this electronic leaflet, to obtain a discount in the business being advertised in this leaflet). Thus, in the case of storing this advertisement information image, this image becomes a mobile voucher giving a discount to the subscriber represented this voucher. This mobile voucher could be also transmitted to another subscriber by means of the phone, which will allow another subscriber also to obtain the discount by this mobile voucher, the electronic leaflet. The option "proceed" response for proceeding the subscriber to the advertiser's WAP reference that is "bound" to every advertisement information image stored in the menu "my advertisement". The so called "binding" means that there is, together with the image, an invisible WAP reference that allows the subscriber to proceed to the advertiser's WAP site without using a WEB browser and without require for dialing by the phone keys the WEB and WAP site address. By pressing the push-button "proceed", the subscriber proceeds automatically to the advertiser's WAP site. For that proceeding, no additional forces except for the described ones are required, as opposed to other proceeding techniques. The option "download" downloads automatically the advertisement information content that has been determined by the advertiser. For example, in the case of advertisement information images of melodies for ringers (ring tones), the subscriber by selecting the option "download" downloads the selected melody which is installed without additional forces automatically to all ringing groups as the ring tone on the phone of this subscriber. If the subscriber does not want to have this melody as a ring tone and/or wishes to limit the groups with this melody (i.e., to install one melody for the call from friends, and another one for the call from colleagues), then just in this case the subscriber should independently perform his/her wishes through the phone menu. In the case of a melody of music or other player, the melody could sound with all rings. But if the melody was installed, and during the incoming call and/or SMS message must sound another melody bound with another advertisement information image (for example, when advertising the Coca-Cola, this company hymn must sound), then at that time the installed melody will not sound (i.e., will be "overlapped"), and at the time of the incoming call with the advertisement information image only the melody corresponding to this image will sound. The same will occur on the phone, but with the MMS still, in the case of the incoming call and/or SMS or MMS message with the advertisement information image. Any picture installed by the subscriber, which appeared, prior to the program installation, at the time of the incoming call and/or message and which is bound with the fact, who calls and/or writes, will be "overlapped" with the advertisement information image, for which will be paid money with the subscriber consent.

The feature of this portion of the invention consists in that, as opposed to habitual technique of the money retention for downloading a given content (such as melodies, pictures, games and other mobile applications), the money for downloading the content through this invention does not retain from the subscriber's current account. The program will retain the money with the subscriber's consent from the future receptions that, as were described previously, have to come during 60 seconds. Hence, due to the invention, if 10 US cents must be paid to the subscriber after the incoming/outgoing call/message with the advertisement information image, then for downloading the content a sum will be retained from the subscriber's future receptions, which sum the subscriber has to pay for the service performed, let it be the same 10 US cents. Accordingly, the subscriber must receive to his/her account 10 US cents (i.e., by means of the ingenious invention replenish his/her subscriber account), but for the performed service (downloading the content) the same 10 US cents were retained from the subscriber. It turns out that as a result of this scheme of cross-cancellation of debits, the subscriber has received the content with such special payment technique. In this case, if the subscriber has not downloaded the content, then, accordingly, the inventor's program has replenished the subscriber's account by 10 US cents. In the case, if the subscriber has expressed a wish either to download more content than the money amount owed to him/her for the shown image, or the cost of one unit of the content exceeds the cost of those money funds which should be paid to the subscriber, the program determines automatically the possibility of crediting the subscriber according to the following criteria: a duration during which the subscriber is the user of the program; average amounts of daily money transfers for the viewed images to the subscriber and a probability of subscriber's dishonest behavior (initiating call on the principle "one's self', colluding with a person and/or persons for initiating calls to himself/herself, calling himself/herself to other persons with the same dishonest purposes, deriving the financial revenue in prejudice of the advertiser (a part of these conditions are specified in the license agreement, onto which the subscriber, in the case of consent, presses "yes" and accepts these conditions), utilizing for those purposes not persons and entities, but office equipment, software and other alike means). The program requests automatically this information from the central station, and in the case of the positive decision of the central station, give its own decision for acquiring this content unit.

The uniqueness of this invention permits the inventor being the owner of the content copyright and/or the content provider not to pay legally to the cellular communication operator. The cellular communication operator in conventional instances for downloading the content unit (by means of sending a unique media code (a set of letters and digits) to a special SMS number of the content provider) retains from the subscriber's account from 10 US cents to 7.5 US dollars for every unit of the downloaded content. The cellular communication operator returns to the content provider just up to 50% from the cost of the content unit downloaded by the conventional method. Due to this invention, firstly, not the subscriber pays for any downloaded content, but directly and implicitly the advertiser. The advertiser sends the money for future image demonstrations to the subscriber through the inventor's bank account on the basis of the agency contract between the advertiser and inventor for placing an advertisement information image. This contract fixes the number of demonstrations per each subscriber, day and time of image demonstration, number of subscribers to which the image demonstrations being performed, personal data of selected subscribers, image form and format, period of advertisement campaign for a given subscriber group. In turn, the inventor, through his own automatic billing and processing system, sends the money to the good of subscriber in the case, if the demonstrations to the subscriber have been performed at the time of incoming/outgoing call/message. Hence, just for this reason, not the subscriber pays for the downloaded content (in the case of downloading), but the advertiser according to the technique described previously. Secondly, this invention permits to the right owner and/or content provider not to pay a share from the monetary funds obtained from the subscriber (through the program of retaining the future payments for the demonstrated images) for the downloaded content unit to the cellular communication operator. A part of this share the owners of the rights for the content permit to retain to the inventor in accordance with the service contract concluded between the inventor and the right owners.

When entering the section "rules" in the program menu, the subscriber obtains a brief information on the program features. The program is initiated automatically when switching on the cellular phone and operates in the background mode. The program connects regularly with the central station for loading new images, storing the reports on the image demonstrations, data on crediting the account, data on the downloaded content units, etc. The push-button "suspend" in the menu responses for suspending temporarily the program activity. The sub-scriber could suspend the program at any time, as well as delete it from the phone menu by the phone means after pressing the push-button "suspend". This push-button is also recommended in the case of roaming. The case is in that the program compensates the total GPRS traffic related to delivering images to the phone into the menu section "my advertisement" up to the time of the image demonstration. The program determines automatically the uppermost cost of 1 Megabyte of the traffic in the operation area of the subscriber's home network and compensates the traffic expenses in the roaming, i.e., the expenses for the GPRS traffic can be significantly higher than in the home network. Therefore, in order for saving the subscriber's funds, the program has an information that the subscriber is recommended in the roaming for pressing "suspend" in his/her phone menu. Activating the service again happens simply by one pressing the icon with the name of the inventor's program. The information will pop up on the phone screen that the program has been activated. The uniqueness of this invention consists in that, if the program is deactivated automatically for technical reasons, then, in the case of every such automatic rather than manual (in the case of "suspend") deactivation, the program is activated automatically and continues to operate. In the case of manual deactivation, only the manual activation can renew the program operation. The command "store" helps the subscriber to store the information on the image demonstrations at the system server. In an ordinary mode this occurs automatically, but if the subscriber decides to disconnect the phone just after the demonstration, then during 60 seconds after the last demonstration the subscriber must press "store" in order not to "lose" the accruals for the made last (happened in the recent 60 seconds) image demonstrations.

Advertisement information images are loaded in the background mode at any time including the peak time of the phone operation and peak time for the subscriber, i.e., from 7:00 to 23:00 and from 23:00 to 7:00.

The received funds for demonstrating advertisement information image could amount 10 cents.times.5 calls per hour.times.24 hours.times.30 days=360 US dollars monthly, which can means an additional income at monthly average expenses of the subscriber in each several country in the world (not more than 50 US dollars per month). Clearing off the expenses with the cellular communication is not the main subscriber's motivation. The main subscriber's motivation is to make money.

The program menu has also the option "my company". Besides the additional information on the program, the subscriber has the access via the WAP connection to a purse on the mobile phone. The purse on the mobile phone is a program that permits the subscriber, when receiving money for the purse account, to send this money for paying not only the mobile communication, but also other services--municipal payments, satellite TV, and other services that can receive payments through mobile phone just now and in the future. The uniqueness of this service in the part of the inventor's program consists in that the subscriber's mobile account at a cellular communication operator can be used only for rendering the cellular communication services. And through the purse in a mobile phone the received monetary reward for the viewed images can be spent for any purposes. The program provides the subscriber a right of choice, what percent the subscriber wants to receive to the mobile account and what percent--to the purse in the mobile phone. After receiving money to the mobile account, the subscriber cannot utilize thereof for other purposes except for paying the communication. And through the purse, the subscriber can even withdraw money the pay office of the purse in the mobile phone. There is a transfer threshold which the subscriber can select and establish in his/her program individually in the option "my company", this threshold being established for transferring to both the subscriber account at the cellular communication operator and the purse in the mobile phone. The transfer threshold implicates a minimal sum, and after exceeding this threshold, this sum is transferred automatically by the program to the subscriber's account for the shown images. The default minimal transfer threshold is established equal to 0.10 US dollars at the rate in the national currency. If the money sum does not exceed this threshold, then the program will not transfer this money to the subscriber. The money will be transferred only after reaching this threshold. The subscriber has a possibility to establish his/her own threshold, but not less the default established one.

After deleting the program the subscriber has also a possibility to establish charge-free the same program once more, but in this case the written-off money for installing the program, if this has been made through the SMS number of operator, will not be compensated by the inventor.

When a call comes, the program shows an advertisement information image and in any case reckons this demonstration irrespectively of the subscriber conversation duration and reckons it even in the case, if the subscriber has thrown the call without reply. The program permits the subscriber to receive money for viewed and for unviewed advertisement information images (in the case, if the subscriber does not reply the call for the reasons that he/she did not hear or behold, has forgotten the phone, and in other cases, when the subscriber does not see the mobile phone screen at the time of the incoming call).

A new banner in accordance with the advertiser's media plan, is also demonstrated, if the subscriber has a "second" line and the subscriber, not interrupting the first call responded the second call and viewed the banner, since without being ascertained that the second call comes and without viewing the determined number of the second caller, the subscriber, most probably, will not reply to the parallel call. The same happens also in the case of the "third" line, when one subscriber waits for picking up the call, the conversation on the second line continues, and the subscriber looks at the third number of the third caller and picks up the call. The same is with the "fourth", "fifth" phone model, and up to the limited number of incoming calls. For every of such demonstrations the subscriber will receive the monetary reward.

In the case of non-responded calls and SMS and MMS messages, the subscriber, prior to checking the number of non-responded calls, enters the menu of the non-responded calls and scrolls all the numbers of caller with the static image and/or GIF animated image and/or video image each being "bound" to every call.

The only time when the subscriber cannot select advertisement information image at the time of incoming call and/or message is the time. When the subscriber is switched off, blocked, or situated in the zone where the network is inoperative.

Sums not less than 10 US cents for the commercial advertisement information images and not less than 4 US cents for the social advertisement information images and advertisement information images of the company itself will be transferred to the subscriber. The traffic compensation to the subscriber for the GPRS Internet connection are by the company separately.

The program permits to receive and send still images, GIF animated images, video images of the size up to 100 kilobytes each one.

The uniqueness of this program is in that filling the questionnaire is a compulsory condition of the program operation.

This program implements a guaranteed contact for the advertiser with the end consumer.

With the subscriber's consent, the program sends to the end subscriber those advertisement information images, to which the subscriber has subscribed when filling the questionnaire (only that to which he/she has subscribed).

The program can operate not only in the GSM standards, but also in the 3G, 4G, 5G, CDMA and other standards, in which the Smartphones operate.

This program has a final form and will be used only in this form.

The method for demonstrating advertisement information images described above is the same in the case of outgoing call and/or SMS and MMS message. The image comes at once when pressing the push-button "call" by the subscriber in the case of the call to another subscriber and "send" in the case of sending SMS and MMS message. All other features of this method for distributing advertisement information images coincide entirely with the method for distributing advertisement information images at the time of incoming calls and/or messages.

If the subscriber has deleted the program and installed it again to the same phone number, then the personal data input for the first time are maintained. At the time of incoming call, an advertisement information image is demonstrated without delay during one second.

## Claims

1. A method for distributing advertisement information images, the method comprising: loading an advertisement information image into a subscriber's cellular phone; demonstrating the advertisement information image at the cellular phone; viewing the advertisement information image; and compensating the user's expenses arisen from using the cellular phone; **characterized in that** the subscriber fills up a questionnaire, on which basis the advertiser selects subscribers for distributing his/her advertisement information image, as which to the cellular phone subscriber is sent the advertisement information image for which the subscriber has subscribed when filling up the questionnaire; wherein the step of loading said advertisement information image to the cellular phone subscriber being carried out with his/her consent and according to the media plan of the advertiser till receiving to the cellular phone an incoming/outgoing call, or incoming/outgoing SMS and/or MMS message; the step of demonstrating said advertisement information image being carried out at the time of the incoming/outgoing call or incoming/outgoing SMS and/or MMS message; the step of viewing said advertisement information image being carried out by the subscriber till the time of the call reply, and/or at the time of the call termination, and/or till the time of the SMS and MMS message view and reply, the advertisement information image being on the mobile phone screen during entire continuance of the conversation or until the call release and/or the SMS and MMS message reply, and the step of compensating the user's expenses being carried out by means of receiving monetary reward to the user's account for every demonstration of the advertisement information image.

2. The method according to claim 1, **characterized in that** when receiving a new SMS and/or MMS message at the time of viewing the advertisement information image, on the phone screen emerges a notification not impeding to view the advertisement information and meaning the fact of receiving the new SMS or MMS message for the subscriber or a new advertisement information image.

3. The method according to claim 1, **characterized in that** the advertisement information image presented on the mobile phone screen is accompanied with a corresponding voice or musical or sound accompaniment being a part of the advertisement information image.

4. The method according to claim 1, **characterized in that** the advertisement information image coming to the subscriber's mobile phone screen is scaled in accordance with the size of the mobile phone screen.

5. The method according to claim 1, **characterized in that** the monetary reward received to the subscriber's account could be used by him/her for paying the communication service and/or any other services, and/or cashed by the subscriber.
